# EUROPÄISCHE PATENTANMELDUNG

(11) **EP 1 923 354 A2**
(43) Veröffentlichungstag der Anmeldung: **21.05.2008**
(21) Anmeldenummer: 07021624.7
(22) Anmeldetag: 07.11.2007
(51) Int. Cl.: C02F 1/14, B01D 3/00, B01D 1/00, B01D 5/00

(54) **Verfahren und Anlage zur Entsalzung von salzhaltigem Rohwasser**

(30) Priorität: 07.11.2006 DE 102006052671
(71) Anmelder: Eco-Solar GmbH, 06366 Köthen (DE)
(72) Erfinder: Herrmann, Walter, 06846 Dessau (DE); Siegel, Hans, 06844 Dessau (DE)
(74) Vertreter: Tragsdorf, Bodo

(57) **Zusammenfassung**

Die Erfindung bezieht sich auf ein Verfahren zur Entsalzung von salzhaltigem Rohwasser, insbesondere Meerwasser, und eine zur Durchführung des Verfahrens geeignete Anlage. Ausgehend von den Nachteilen des bekannten Standes der Technik sollen ein Verfahren und eine Anlage geschaffen werden, die sich durch eine wirtschaftliche Betriebsweise auszeichnen.

Hierzu wird als Lösung vorgeschlagen, dass das Rohwasser in einem ersten Wärmetauscher 1 bis auf Verdampfungstemperatur erhitzt und das gebildete Wasser/Dampfgemisch in ein Trenngefäß 2 geleitet wird. In diesem werden am Kopf Dampf und am Boden angesammelte Sole abgezogen. Im Trenngefäß 2 befindliches Rohwasser wird in den ersten Wärmetauscher 1 zurückgeführt und in diesem mit frischem Rohwasser vermischt und zur Verdampfung gebracht. Der aus dem Trenngefäß 2 abgezogene Dampf wird entweder in einem zweiten Wärmetauscher 9 oder in einer Venturidüse 24 überhitzt. Der überhitzte Dampf gelangt als Wärmeträger in den ersten Wärmetauscher 1 zur Erwärmung des Rohwassers, kondensiert und wird als Destillat abgeführt.

Die erforderliche thermische Energie kann nahezu ausschließlich durch die Umwandlung von Solarenergie erzeugt werden. Im kontinuierlichen Betrieb der Anlage wird ein hoher Wärmerückgewinnungsgrad erreicht.

## Beschreibung

Die Erfindung bezieht sich auf ein Verfahren zur Entsalzung von salzhaltigem Rohwasser, insbesondere Meerwasser, und eine zur Durchführung des Verfahrens geeignete Anlage.

Es ist allgemein bekannt, Meerwasser zu entsalzen, indem das Meerwasser erwärmt und diesem durch Verdampfung Salz entzogen wird und der gebildete Dampf zu Frischwasser kondensiert. Die erforderliche Prozesswärme kann dabei mittels solarer Energie erzeugt werden.

Aus der DE-10 2004 035 189 A1 ist eine Anlage zur Entsalzung von salzhaltigem Rohwasser bekannt. Zur Verdampfung des Rohwassers wird ein offenes Kanalsystem eingesetzt, das von einer Umhausung umgeben ist. Das Rohwasser wird Ober ein Wärmetauschersystem, das aus mehreren in Reihe geschalteten Wärmetauschern besteht, stufenweise bis auf Siedetemperatur erhitzt. Jedem Wärmetauscher ist ein Sonnenkollektor zugeordnet, der von einem flüssigen Wärmeträger durchströmt wird und die erforderliche Prozesswärme an den jeweiligen Wärmetauscher abgibt. Durch Verdampfen des Rohwassers in der letzten Stufe in einem Ringkanal wird ein umhauster Luftströmungskanal mit einem Gemisch aus Luft und aufsteigendem Wasserdampf gefüllt. Das Gemisch aus Luft und Wasserdampf wird in dem Luftströmungskanal zirkullerend umgewälzt und gelangt in eine mit frischem Rohwasser gekühlte Kühleinheit, in der der Wasserdampf zu Nutzwasser kondensiert.

Das noch vorhandene Restgemisch Luft/Wasserdampf wird in einer Heizeinrichtung, die im Luftströmungskanal der Umhausung angeordnet ist, erwärmt, um Wasserdampf aufzunehmen. Die mit Wasserdampf angereicherte, erwärmte Luft wird erneut durch den Luftströmungskanal geleitet und zusammen mit neu aufgenommenem Wasserdampf wieder der Kühleinheit zugeführt. Diese Anlage erfordert einen hohen Herstellunge- und Montageaufwand.

In der DE 201 19 747 U1 ist eine Anlage zur Entsalzung von Flüssigkeiten beschrieben, die aus einer Verdampfungskammer besteht, in der ein als Kondensationsraum dienender Wärmetauscher untergebracht ist, wobei sich zwischen der Verdampfungskammer und dem Kondensationsraum ein Kompressor befindet, an dessen Ausgang ein als Sonnenkollektor ausgebildeter Wärmeträgererhitzer angeschlossen ist. Der Wärmeträgererhitzer dient nur zur Erzeugung von überhitztem Dampf während der Anfahrphase. Während der Arbeltsphase wird der aus dem Kompressor austretende Dampf wieder in den Kondensationsraum geleitet. Die Anlage erfordert den Einsatz eines Kompressors. Zur Erhitzung der Flüssigkeit in den Siedezustand muss zeitweise noch ein elektrischer Flüssigkeitserhitzer zugeschaltet werden. Die Anlage erfordert die Bereitstellung einer zusätzlichen Stromversorgung und ist in ihrer Herstellung und Wartung sehr aufwendig.

Der Erfindung liegt die Aufgabe zugrunde, ein Verfahren zur Entsalzung von salzhaltigem Rohwasser, insbesondere Meerwasser, zu schaffen, das sich durch eine wirtschaftlichere Betriebsweise auszeichnet. Ferner soll eine zur Durchführung des Verfahrens geeignete Anlage geschaffen werden, die einen geringen baulichen Aufwand erfordert und für einen mobilen oder stationären Einsatz geeignet ist.

Erfindungsgemäß wird die Aufgabe durch die im Anspruch 1 angegebenen Merkmale gelöst. Vorteilhafte Ausgestaltungen und Weiterbildungen der Verfahrensweise sind Gegenstand der Ansprüche 2 bis 8. Eine zur Durchführung des Verfahrens geeignete Anlage ist in den Ansprüchen 9 und 10 angegeben. Vorteilhafte Ausführungsvarianten sind Gegenstand der Ansprüche 11 bis 13.

Verfahrensgemäß wird das zu entsalzende Rohwasser in einem ersten Wärmetauscher auf Verdampfungstemperatur erhitzt. Das gebildete Wasser/Dampfgemisch wird in ein unmittelbar neben dem Wärmetauscher angeordnetes Trenngefäß geleitet. In diesem befindet sich bis zu einer bestimmten Füllstandshöhe aus Sattdampf abgeschiedenes Rohwasser und oberhalb des Wasserspiegels die Dampfphase. Der Dampf wird am Kopf des Trenngefäßes abgezogen und im Trenngefäß befindliches Rohwasser in den ersten Wärmetauscher zurückgeführt. Die Rückführung erfolgt ausschließlich durch Schwerkraft. In dem ersten Wärmetauscher, der vorzugsweise als vertikal angeordneter Rohrbündelwärmetauscher ausgebildet ist, vermischt sich das zurück geströmte heiße Rohwasser mit frischem Rohwasser, das wieder zur Verdampfung gebracht wird. Der aus dem Trenngefäß abgezogene Dampf wird entweder in einem zweiten Wärmetauscher oder in einer Venturidüse überhitzt. Der überhitzte Dampf gelangt als Wärmeträger in den ersten Wärmetauscher zur Erwärmung des Rohwassers, kondensiert und wird als Destillat abgeführt.

Die Überhitzung des Dampfes im zweiten Wärmetauscher erfolgt über einen durch solare Energie erwärmten flüssigen Wärmeträger auf eine Temperatur, die höher ist als die Temperatur des abgezogenen Sattdampfes. Der Wärmeträger wird durch ein erstes Solarkollektorfeld gepumpt und in diesem auf die erforderliche Temperatur zur Überhitzung des Sattdampfes gebracht. Der überhitzte Dampf dient als Wärmeträger zur Erhitzung des im ersten Wärmetauscher befindlichen Rohwassers. Während des Durchströmens der Röhren im Wärmetauscher kühlt sich der nahezu salzfreie Dampf ab und kondensiert. Das in einem Sammelraum anfallende, heiße Destillat wird abgeführt. Im Trenngefäß wird aus dem Sattdampf salzhaltiges Wasser abgeschieden, wobei sich die salzhaltige Sole am Boden absetzt und abgeführt wird.

Anstelle einer Überhitzung des Dampfes auf indirektem Weg mittels Wärmetauscher kann der aus dem Trenngefäß abgezogene Sattdampf auch auf direktem Weg in einer Venturidüse mittels Treibdampf überhitzt werden. Der Treibdampf wird in einem Solarkollektorfeld erzeugt, dem weitestgehend salzfreies Destillat bzw. Kondensat zugeführt wird, das aus dem ersten Wärmetauscher über eine Abzweigleitung abgepumpt und dessen Druck vor Einleitung in das Solarkollektorfeld erhöht wird. Der Trelbdampf gelangt in die Venturidüse, die gleichzeitig Sattdampf aus dem Trenngefäß ansaugt, verdichtet und überhitzten Dampf erzeugt, der dem ersten Wärmetauscher zugeführt wird.

Das im Trenngefäß befindliche Rohwasser wird zumindest zeitweise, während der Anfahrphase der Anlage, über den im Kreislauf zirkulierenden Wärmeträger mit erwärmt. Vorzugsweise ist es zweckmäßig, das Rohwasser vor der Einleitung in den ersten Wärmetauscher zu erwärmen. Dies kann mittels eines vorgeschalteten Wärmetauschers und/oder über ein zweites Solarkollektorfeld erfolgen. Zur Erwärmung dieses Wärmetauschers wird heißes Destillat als Wärmeträger eingesetzt, das dem ersten Wärmetauscher entnommen wird.

Zweckmäßig ist es, wenn das zugeführte Rohwasser auf eine Temperatur erwärmt wird, die der Temperatur des im Trenngefäß befindlichen Rohwassers entspricht,

Die vorgeschlagene Verfahrensweise ermöglicht eine besonders wirtschaftliche Prozessführung. Die für die Entsalzung erforderliche thermische Energie kann ausschließlich durch Umwandlung von Solarenergie erzeugt werden. Im kontinuierlichen Betrieb der Anlage wird ein hoher Wärmerückgewinnungsgrad erreicht. Während der gesamten Betriebsdauer wird der überhitzte Dampf vor der eigentlichen Kondensation noch effektiv als Wärmeträger zur Verdampfung des Rohwasser genutzt.

Eine zur Durchführung des Verfahrens geeignete erste Ausführung einer Anlage besteht mindestens aus einem ersten Wärmetauscher als Verdampfer- und Kondensationseinheit, einem Trenngefäß und einem ersten Solarkollektorfeld. Der erste Wärmetauscher und das Trenngefäß sind über eine erste Leitung zur Zuführung von im ersten Wärmetauscher gebildetem Dampf und über eine zweite Leitung zur Rückführung von im Trenngefäß befindlichem Rohwasser und über eine dritte Leitung zur Ableitung von Dampf aus dem Trenngefäß in den ersten Wärmetauscher als Wärmeträger und zur Bildung von Kondensat verbunden. Zur erforderlichen Überhitzung des aus dem Trenngefäß abgezogenen Sattdampfes ist ein zweiter Wärmetauscher vorgesehen, der in den zugehörigen Leitungsverbund integriert ist. Der zweite Wärmetauscher wird von einem in einer Kreislaufieltung zirkulierenden flüssigen Wärmeträger gespeist, der das erste Solarkollektorteld durchströmt und in diesem auf die erforderliche Temperatur erhitzt wird.

Eine zweite Ausführung einer Anlage unterscheidet sich von der ersten Ausführung dadurch, dass anstelle des zweiten Wärmetauschers in die Dampf führende Leitung zwischen Trenngefäß und dem ersten Wärmetauscher eine Venturidüse zur Überhitzung des Sattdampfes eingebunden ist. Die Saugseite der Venturidüse ist mit der vom Trenngefäß abzweigenden Dampfleitung verbunden. An der Druckseite ist eine Treibdampf führende Leitung angeschlossen, in die das erste Solarkollektorfeld eingebunden ist. Aus einem Teil des im Prozess anfallenden Kondensats wird im ersten Solarkollektorfeld der erforderliche Treibdampf erzeugt. In die das Destillat/Kondensat führende Leitung sind in Strömungsrichtung eine Pumpe und hinter dieser ein Druckbehälter eingebunden.

Gemäß einer weiteren Ausgestaltung ist vorgesehen, dass zur Erwärmung des Rohwassers, vor der Einleitung in den ersten Wärmetauscher, in die zugehörige Leitung ein zweiter Wärmetauscher eingebunden ist, wobei dieser mit einer Leitung zur Zuführung von Kondensat als Wärmeträger verbunden ist.

Zur Rohwassererwärmung kann auch ein zweites Solarkollektorfeld eingesetzt werden, das in die zugehörige Leitung eingebunden und meerwasserfest ausgerüstet ist. Beide vorgenannte Alternativen können auch miteinander kombiniert zum Einsatz gelangen.

Die Anlage wird vorzugsweise bei maximalen Temperaturen von 120 bis 140 °C und Drücken von nicht über 3 bar betrieben. Die Anlage kann in stationärer oder mobiler Ausführung kostengünstig hergestellt werden und erfordert nur einen geringen Montageaufwand vor Ort.

Die Erfindung soll nachstehend an einigen Beispielen erläutert werden. In der zugehörigen Zeichnung zeigen:
- Fig. 1: eine erste Ausführungsvariante einer Meerwasserentsalzungsanlage als Funktionsschaltbild,
- Fig.: 2 eine zweite Ausführungsvariante einer Meerwasserentsalzungsanlage als Funktionssehaltbild, und
- Fig. 3: eine dritte Ausführungsvariante einer Meerwasserentsalzungsanlage als Funktionsschaltbild.

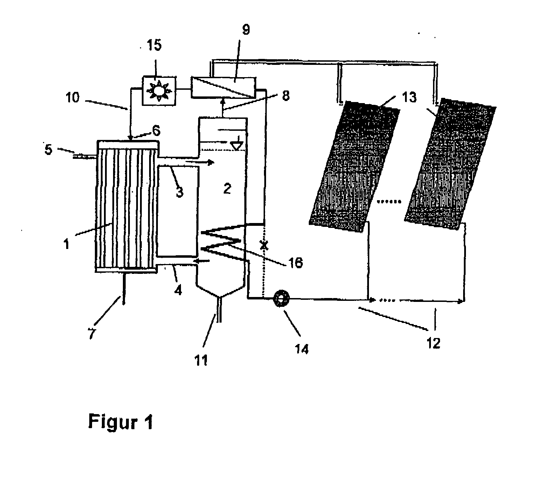

Die in Fig. 1 gezeigte Meerwasserentsalzungsanlage besteht aus einem kombinierten Röhrenwärmetauscher 1 zur Verdampfung und Kondensation und einem Trenngefäß 2.

Der Röhrenwärmetauscher 1 und das Trenngefäß 2 bilden eine Funktionseinheit und sind vorzugsweise in einem geringen Abstand zueinander angeordnet und über eine Zulaufleitung 3 sowie eine Ablaufleitung 4 miteinander verbunden. Der Röhrenwärmetauscher 1 besitzt an seinem oberen Abschnitt einen Anschluss 5 oder eine Leitung für die Zuführung von Rohwasser und einen weiteren Anschluss 6 für die Zuführung von überhitztem Sattdampf als Wärmeträger, der durch die vertikal angeordneten Röhren strömt und kondensiert. Die Röhren besitzen an ihrem unteren Ende eine Öffnung, die in eine vom Rohwasser abgetrennte Sammelkammer münden, in der das anfallende Kondensat aufgefangen wird. Am Boden des Röhrenwärmetauschers 1 befindet sich ein Leitungsanschluss 7 zur Abführung von Destillat bzw. Kondensat. Am Kopf des Trenngefäßes 2 ist eine Leitung 8 angeordnet, die mit einem zweiten Wärmetauscher 9 verbunden ist. Vom Wärmetauscher 9 führt eine Leitung 10 zum Röhrenwärmetauscher 1. Am Boden des Trenngefäßes 2 befindet sich ein Anschluss 11 zur Abführung von im Trenngefäß 2 abgeschiedener Sole. An den Wärmetauscher 9 ist eine Kreislaufleitung 12 angeschlossen, in die ein Solarkollektorfeld 13 und eine Umwälzpumpe 14 eingebunden sind. Die Kreislaufleitung 12 wird von einem flüssigen Wärmeträger durchströmt.

Die Funktionsweise der Anlage ist folgende:

In dem Röhrenwärmetauscher 1 wird zugeführtes Rohwasser bis zur Verdampfung erhitzt. Der gebildete Sattdampf gelangt in das Trenngefäß 2 und wird am Kopf abgezogen und in dem nachfolgenden Wärmetauscher 9 überhitzt. Die erforderliche Wärmeenergie zur Überhitzung des Sattdampfes wird im Kreislauf 12 erzeugt, wobei der zirkulierende flüssige Wärmeträger das Solarkollektorfeld 13 durchströmt und auf eine entsprechend hohe Temperatur erhitzt wird.

Das im Sattdampf enthaltene salzhaltige Wasser wird im Trenngefäß 2 abgeschieden, wobei sich die Sole am Boden absetzt. Aufgrund der Schwerkraft strömt im Trenngefäß 2 befindllches Rohwasser wieder in den Röhrenwärmetauscher 1 zurück und vermischt sich mit zugeführtem Rohwasser. Der aus dem Wärmetauscher 9 abströmende überhitzte Sattdampf gelangt über die Leitung 10 in die Röhren des Röhrenwärmetauschers 1 und erhitzt das in diesem befindliche Rohwasser bis zur Verdampfung. Zur Erhöhung des Druckes in der Leitung 10 ist in diese ein Gebläse 15 eingebunden. Der Sattdampf wird im Wärmetauscher 9 auf mindestens eine um 10 °C höhere Temperatur erwärmt als die Temperatur des Sattdampfes im Trenngefäß 2.

Der dem Röhrenwärmetauscher 1 zugeführte überhitzte Sattdampf wird durch den stattfindenden Wänneübertragungsvorgang abgekühlt und kondensiert in diesem. Das anfallende Destillat wird über die Leitung 7 als entsalztes Brauchwasser abgeführt. Nach einer bestimmten Betriebsdauer wird die sich am Boden des Trenngefäßes 2 ansammelnde Sole abgezogen.

Während der Anfahrphase der Anlage ist es zweckmäßig, das im Trenngefäß 2 befindliche Rohwasser auf eine Temperatur von ca. 80 °C zu erwärmen. Die Erwärmung kann über den Kreislauf 12 geführten Wärmeträger erfolgen. In Fig. 1 ist hierzu vereinfacht eine absperrbare Heizschlange 16 dargestellt, die Bestandteil der Kreislaufleitung 12 ist. Es besteht auch die Möglichkeit, das Trenngefäß 2 mit einem Heizmantel auszurüsten, der von dem im Kreislauf 12 zirkulierenden Wärmeträger durchströmt wird.

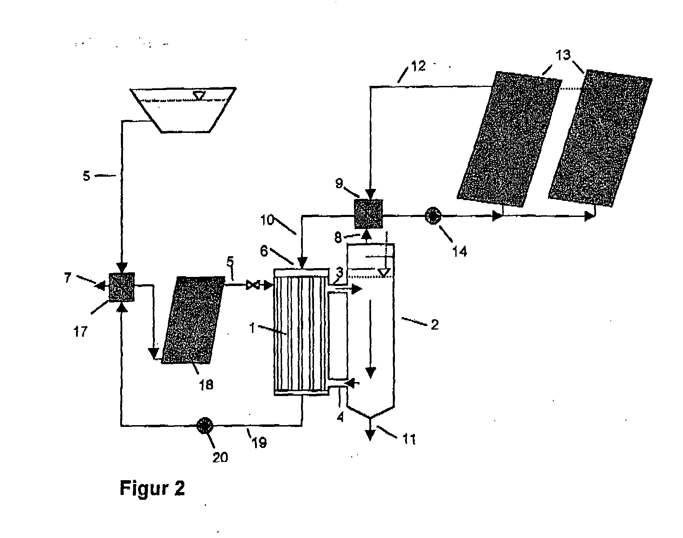

Die in Fig. 2 gezeigte Ausführungsvariante unterscheidet sich wie folgt von der gemäß Fig. 1. Auf die Darstellung einer zusätzlichen Erwärmung des Rohwassers im Trenngefäß wurde verzichtet. Das zu entsalzende Meerwasser wird vor der Zuführung in den Röhrenwärmetauscher 1 auf eine Temperatur von ca. 80 °C vorgewärmt. Hierzu sind ein dritter Wärmetauscher 17 und ein weiteres Solarkollektorfold 18 vorgesehen. Der dritte Wärmetauscher 17 wird mittels des am Röhrenwärmetauscher 1 abgezogenen Destillates erwärmt. Dieses besitzt noch eine Temperatur von ca. 80 °C und wird über eine Leitung 19 mittels der Pumpe 20 zum Wärmetauscher 17 gepumpt und anschließend über die Leitung 7 als abgekühltes Destillat abgezogen. Das Meerwasser mit einer Temperatur von ca. 25 °C wird im Wärmetauscher 17 vorgewärmt und anschließend durch ein meerwasserfestes Solarkallektorfeld 18 geleitet, dabei auf eine Temperatur von ca. 80 °C erwärmt und gelangt anschließend in den Röhrenwärmetauscher 1. Die Solarkollektorfelder, die z. B. aus Flachkollektoren, Vakuumröhrenkollektoren oder Parabolspiegelkollektoren bestehen, können in ihrer Größe und Leistung unterschiedlich ausgebildet sein.

Die in Fig. 2 dargestellte Anlage wird beispielsweise mit folgenden Betriebstemperaturen gefahren. Das zu entsalzende Meerwasser wird vor der Einleitung in den Röhrenwärmetauscher 1 auf ca. 80°C vorgewärmt. Der Wärmeträger im Kreislauf 12 wird mittels der Solarkollektorfelder 13 auf eine Temperatur von ca. 125 bis 140 °C erhitzt und durchströmt den Wärmetauscher 9. Der vom Trenngefäß 2 in den Wärmetauscher 9 abströmende Sattdampf hat ca. 100 °C und wird beim Durchlauf durch den Wärmetauscher 9 auf ca. 120 °C überhitzt und gelangt mit dieser Temperatur in den Röhrenwärmetauscher 1. Das aus dem Trenngefäß 2 in den Röhrenwärmetauscher 1 rückströmende Rohwasser besitzt eine Temperatur von ca. 80 °C. Vorgenannte Temperaturen beziehen sich auf einen Betrieb der Anlage unter Normaldruck.

Der dem Röhrenwärmetauscher 1 zugeführte überhitzte Sattdampf erwärmt das 80 °C heiße Rohwasser problemlos bis auf die Verdampfungstemperatur. Im oberen Teil des Trenngefäßes 2, im Dampfraum, herrscht eine Temperatur von ca. 100 °C.

Im Röhrenwärmetauscher 1 besteht zwischen dem Wärme abgebenden Medium (überhitzter Dampf) und dem zu erwärmenden Medium (Salzwasser) eine ausreichend hohe Temperaturdifferenz, die mindestens 15 °C betragen sollte.

Die zur Prozessdurchführung benötigte Wärmeenergie wird ausschließlich über die Solarkollektorfelder 13 und 18 gewonnen. Nach einer Anfahrphase kann kontinuierlich eine bestimmte Menge an Meerwasser entsalzt werden.

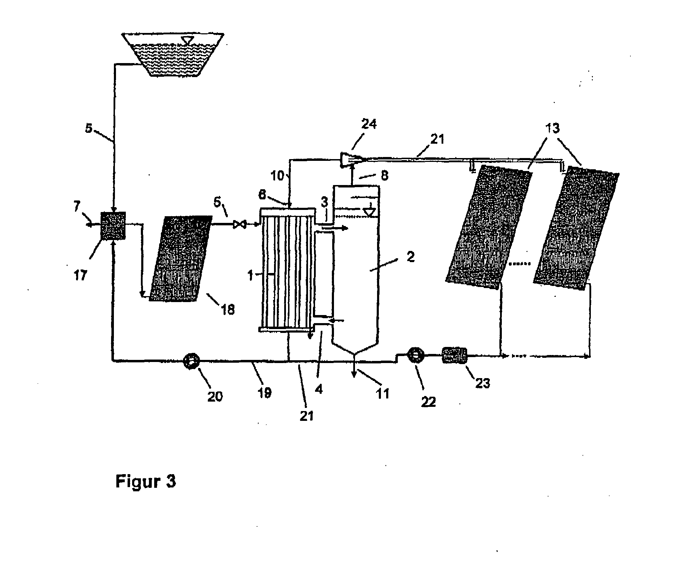

Die in Fig. 3 gezeigte Anlage unterscheidet sich von der gemäß den Figuren 1 und 2 dadurch, dass zur Überhitzung des Dampfes eine Venturidüse eingesetzt wird, der mittels des Solerkollektorfeldes 13 erzeugter Treibdampf zugeführt wird. Über eine vom Röhrenwärmertauscher 1 geführte Abzweigleitung 21, in die eine Pumpe 22 und ein Druckbehälter 23 eingebunden sind, wird nahezu salzfreies Destillat unter erhöhtem Druck zu den Feldern des Solarkollektors 13 gepumpt. Zur Druckerhöhung ist in die Leitung 21 ein Druckbehälter 23 eingebunden. Das durch die Kollektorfelder 13 strömende Destillat wird in diesen bis zur Bildung von Treibdampf erhitzt. Der Treibdampf wird einer Venturidüse 24 zugeführt, die gleichzeitig Sattdampf aus dem Trenngefäß 2 ansaugt, wobei der Sattdampf verdichtet und überhitzt wird. Dies führt zu eine Druckabsenkung im Trenngefäß 2. Dadurch kann die erforderliche Verdampfungstemperatur verringert werden, wodurch sich die Verdampfungsleistung erhöht.

Zur Erzeugung des Treibdampfes können auch spezielle Parabolspiegelkollektoren eingesetzt werden, mit denen sich höhere Temperaturen erzielen lassen.

Die Meerwasserentsalzungsanlage ermöglicht eine Prozessführung mit einer hohen Wärmerückgewinnung und benötigt daher nur einen sehr kleinen Anteil an Fremdenergie. Die zur Prozessführung erforderliche thermische Energie wird durch Umwandlung von solarer Energie bereitgestellt,

Die Anlage zeichnet sich durch einen einfachen Aufbau sowie geringe Herstellungskosten aus und erfordert keine besonderen sicherheitstechnischen Anforderungen.

Für einen praktischen Einsatz können die Anlagen so ausgelegt werden, dass als Tageslelstung 100 bis 4000 1 Trinkwasser aus Meerwasser gewonnen werden können.

## Patentansprüche

1. Verfahren zur Entsalzung von salzhaltigem Rohwasser, insbesondere Meerwasser, wobei das Rohwasser erwärmt und diesem durch Verdampfung Salz entzogen, gebildeter Wasserdampf überhitzt und zur Erwärmung des Rohwassers eingesetzt wird und gebildeter Dampf zu Frischwasser kondensiert, **dadurch gekennzeichnet, dass** das Rohwasser in einem ersten Wärmetauscher (1) bis auf Verdampfungstemperatur erhitzt wird, das gebildete Wasser/Dampfgemisch in ein Trenngefäß (2) geleitet wird, wobei am Kopf des Trenngefäßes (2) Dampf und am Boden angesammelte Sole abgezogen werden und im Trenngefäß (2) befindliches Rohwasser in den ersten Wärmetauscher (1) zurückgeführt, in diesem mit frischem Rohwasser vermischt und zur Verdampfung gebracht wird, der aus dem Trenngefäß (2) abgezogene Dampf entweder in einem zweiten Wärmetauscher (9) oder in einer Venturidüse (24) überhitzt wird und während der gesamten Betriebsdauer überhitzter Dampf als Wärmeträger in den ersten Wärmetauscher (1) zur Erwärmung des Rohwassers gelangt, dabei kondensiert und als Destillat abgeführt wird.

2. Verfahren nach Anspruch 1, **dadurch gekennzeichnet, dass** der zweite Wärmetauscher (9) zur Überhitzung des Dampfes mittels eines flüssigen Wärmeträgers erwärmt wird, der durch ein in einen Kreislauf (12) eingebundenes Solarkollektorfeld (13) erhitzt wird.

3. Verfahren nach Anspruch 1, **dadurch gekennzeichnet, dass** der Venturidüse (24) Treibdampf zugeführt wird, der in einem Solarkollektorfeld (13) erzeugt wird, wobei diesem über eine Abzweigleitung (21) Destillat unter erhöhtem Druck zugeführt wird.

4. Verfahren nach einem der Ansprüche 1 bis 3, **dadurch gekennzeichnet, dass** das im Trenngefäß (2) befindliche Rohwasser zumindest zeitweise über den im Kreislauf (12) zirkulierenden Wärmeträger mit erwärmt wird.

5. Verfahren nach einem der Ansprüche 1 bis 4, **dadurch gekennzeichnet, dass** der Druck des überhitzten Dampfes erhöht wird.

6. Verfahren nach einem der Ansprüche 1 bis 5, **dadurch gekennzeichnet, dass** das Rohwasser vor der Einleitung in den ersten Wärmetauscher (1) ein zweites Solarkollektorfeld (18) durchströmt und in diesem vorgewärmt wird.

7. Verfahren nach einem der Ansprüche 1 bis 6, **dadurch gekennzeichnet, dass** das Rohwasser vor der Einleitung in den ersten Wärmetauscher (1) einen vorgeschalteten Wärmetauscher (17) durchströmt, der mittels abgezogenem Destillat erwärmt wird.

8. Verfahren nach einem der Ansprüche 1 bis 7, **dadurch gekennzeichnet, dass** das zugeführte Rohwasser auf eine Temperatur erwärmt wird, die der Temperatur des im Trenngefäß (2) befindlichen Rohwassers entspricht.

9. Anlage zur Durchführung des Verfahrens nach mindestens einem der Ansprüche 1 bis 8, **dadurch gekennzeichnet, dass** diese mindestens aus einem ersten Wärmetauscher (1) als Verdampfer- und Kondensationseinheit, einem Trenngefäß (2) und einem ersten Solarkollektorfeld (13) besteht, wobei der erste Wärmetauscher (1) und das Trenngefäß (2) über eine erste Leitung (3) zur Zuführung von im ersten Wärmetauscher (1) gebildetem Dampf und über eine zweite Leitung (4) zur Rückführung von im Trenngefäß (2) befindlichem Rohwasser und über eine dritte Leitung (8, 10) zur Ableitung von Dampf aus dem Trenngefäß (2) in den ersten Wärmetauscher (1) als Wärmeträger und zur Bildung von Kondensat verbunden sind, und in die Leitung (8, 10) ein zweiter Wärmetauscher (9) zur Überhitzung des Dampfes eingebunden ist, und das Solarkollektorfeld (13) in eine von einem Wärmeträger durchströmbare Kreislaufleitung (12) eingebunden ist, die den zweiten Wärmetauscher (9) mit der erforderlichen Wärmenergie versorgt.

10. Anlage zur Durchführung des Verfahrens nach mindestens einem der Ansprüche 1 bis 8, **dadurch gekennzeichnet, dass** diese mindestens aus einem ersten Wärmetauscher (1) als Verdampfer- und Kondensationseinheit, einem Trenngefäß (2) und einem ersten Solarkollektorfeld (13) besteht, wobei der erste Wärmetauscher (1) und das Trenngefäß (2) über eine erste Leitung (3) zur Zuführung von im ersten Wärmetauscher (1) gebildetem Dampf und über eine zweite Leitung (4) zur Rückführung von im Trenngefäß (2) befindlichem Rohwasser und über eine dritte Leitung (8, 10) zur Ableitung von Dampf aus dem Trenngefäß (2) in den ersten Wärmetauscher (1) als Wärmeträger und zur Bildung von Kondensat verbunden sind, und in die dritte Leitung (8, 10) eine Venturidüse (24) eingebunden ist, deren Saugseite mit der vom Trenngefäß (2) abzweigenden Leitung (8) verbunden ist und an deren Druckseite eine Treibdampf führende Leitung (21) angeschlossen ist, in die das erste Solarkollektorfeld (13) eingebunden ist, in dem Treibdampf aus Destillat/Kondensat erzeugt wird, das ausgehend vom ersten Wärmetauscher (1) über die Leitung (21) zum ersten Solarkollektorfeld (13) gelangt.

11. Anlage nach Anspruch 10, **dadurch gekennzeichnet, dass** in die Destillat/Kondensat führende Leitung (21) in Strömungsrichtung eine Pumpe (22) und hinter dieser ein Druckbehälter (23) eingebunden sind.

12. Anlage nach einem der Ansprüche 9 bis 11, **dadurch gekennzeichnet, dass** in die Leitung (5) zur Zuführung von Rohwasser in den ersten Wärmetauscher (1) ein dritter Wärmetauscher (17) zur Erwärmung des Rohwassers eingebunden ist, wobei dieser mit einer Leitung (19) zur Zuführung von Kondensat als Wärmeträger verbunden ist.

13. Anlage nach einem der Ansprüche 9 bis 11, **dadurch gekennzeichnet, dass** in die Leitung (5) zur Zuführung von Rohwasser in den ersten Wärmetauscher (1) ein zweites Solarkollektorfeld (18) zur direkten Erwärmung des Rohwassers eingebunden ist.
